# EUROPÄISCHE PATENTANMELDUNG

(11) **EP 1 170 712 A2**
(43) Veröffentlichungstag der Anmeldung: **09.01.2002**
(21) Anmeldenummer: 01116347.4
(22) Anmeldetag: 05.07.2001
(51) Int. Cl.: G08B 27/00

(54) **Alarmierungssystem zur schnellen Weiterleitung von Alarmmeldungen und zur raschen Alarmierung einer Mindestpersonenzahl**

(30) Priorität: 05.07.2000 DE 10032055; 05.07.2000 DE 20011427 U
(71) Anmelder: Vierling Electronics GmbH+Co.KG, 91320 Ebermannstadt (DE)
(72) Erfinder: Vierling, Manfred, 91320 Ebermannstadt (DE); Krause, Jürgen, 91320 Ebermannstadt (DE); Peter, Wolfgang, 91327 Gössweinstein (DE); Schmitt, Hans-Jürgen, 91083 Baiersdorf (DE)
(74) Vertreter: Dreykorn-Lindner, Werner, Dipl.-Ing.

(57) **Zusammenfassung**

1. Alarmiemngssystem zur schnellen Weiterleitung von Alarmmeldungen und zur raschen Alarmierung einer Mindestpersonenzahl.
2.1 Bekannt sind verschiedene Ausführungsformen von Alarmierungssystemen. Wenig, Beachtung fand jedoch der Personenkreis der Freiwilligen Feuerwehren, Technisches Hilfswerk, Bergwacht, freiwillige Sanitäter u.a. Hier ist je nach Notfall in einer bestimmten Region der gesamte oder nur ein Teil des bestimmten Personenkreises zu alarmieren.
2.2 Um eine rasche und zuverlässige Weiterleitung von Alarmmeldungen und die Alarmierung einer Mindestzahl von Personen sicherzustellen, ist erfindungsgemäß vorgesehen, dass die Alarmmeldung der jeweiligen Alarmeinrichtung (A) drahtlos oder drahtgebunden zu einer Alarmempfangseinrichtung (AE) in einer Alarmzentrale (AZ) übermittelt werden. Die Alarmempfangseinrichtung (AE) weist eine Steuereinrichtung (ST) zur Auswertung der Alarmmeldung nach Alarminhalt und voraussichtlich benötigter Zeitdauer für die Alarmierung auf. Mit dieser steht eine Mobileinrichtung (ME) und/oder ein Funkmodem (FM) zur automatischen Weiterleitung der Alarmmeldung an die Mobilstationen (MS) oder Teilnehmerendeinrichtungen (TE) des Fernsprechnetzes in Verbindung. Die angesprochenen Mobilstationen (MS) oder Teilnehmerendeinrichtungen (TE) übermitteln eine Bestätigungsmeldung oder ein Quittungssignal zur Alarmempfangseinrichtung (AE), welche die Anzahl von Bestätigungsmeldungen oder Quittungssignalen zählt.
2.3 Die Erfindung liegt auf dem Gebiet der Alarmierungssysteme.

## Beschreibung

Die Erfindung betrifft, gemäß Patentanspruch 1, in erster Linie ein Alarmierungssystem zur Weiterleitung von Alarmmeldungen von Alarmeinrichtungen über ein Mobilfunk-/Fernsprechnetz.

Alarmierungssysteme für unterschiedliche Zwecke, insbesondere für den öffentlichen oder privaten Bereich, sind seit langem bekannt. So ist aus dem DE 92 10 926.8 U1 eine Wachalarmeinrichtung mit einer speicherprogrammierbaren Rechnereinheit zur Alarmierung der Einsatzkräfte einer Feuerwache mittels optischer und akustischer Anzeigeeinrichtungen, bekannt, wobei die Wachalarmeinrichtung über eine überwachte Meldeleitung mit einer Einsatzzentrale verbunden ist. Im einzelnen ist vorgesehen, dass die Wachalarmeinrichtung eine elektroakustische Anlage sowie Fahrzeug-Anzeigentableaus aufweist, die von der Rechnereinheit gesteuert werden, um fahrzeugspezifische Tonfolgen entsprechend der Alarmanforderung (Alarmtelegramm) zur selektiven Alarmierung von einzelnen Fahrzeugen oder Fahrzeuggruppen auf angeschlossene Lautsprecherkreise und Fahrzeuganzeigekreise zu schalten, wobei die erfolgten Tonfolgen automatisch der Einsatzzentrale gemeldet werden. Die Alarmierung von Fahrzeugen oder Fahrzeuggruppen kann dabei sowohl innerhalb einer Feuerwache als auch bei einer örtlich abgesetzten Außenstelle erfolgen. Dabei können die Alarme sowohl von einem Handbedienfeld als auch über eine Fernmeldeleitung von der Einsatzzentrale ausgelöst werden. Hierzu werden alle Informationen zur Auslösung eines Alarms zu einem Alarmtelegramm zusammengefaßt. Um auch das Eintreffen mehrerer Alarmtelegramme, die z.B. von verschiedenen Leitplätzen der Einsatzzentrale kommen können, zu verarbeiten, weist die Wachalarmeinrichtung einen Zwischenspeicher auf. In dem Zwischenspeicher werden die eingehenden Alarmtelegramme gespeichert und können dann in der Reihenfolge ihres Eintreffens abgearbeitet werden. Ebenso können die in der Feuerwache selbst ausgelösten Handalarmtelegramme gleichberechtigt neben den anderen Telegrammen aufgenommen und verarbeitet werden und die einzelnen Tonfolgen laufen dann direkt nacheinander ab.

Um die Ausfallmeldesicherheit für die Übertragung von Alarm- und Notrufen zur Feuerwehr oder Polizei zu gewährleisten, ist aus der DE 43 41 322 A1 eine Anordnung bekannt, bei der Alarm- und Notrufeinrichtungen über Anpassungseinrichtungen an ein Datennetz angeschaltet sind, welches von seiner Grundkonzeption her zyklische Dialoge zwischen den Endeinrichtungen und den zentralen Systemen beinhaltet. Die Alarm- und Notrufeinrichtungen sind so in das Datennetz eingebunden, dass sie ebenfalls einer ständigen zyklischen Kontrolle der Betriebsbereitschaft unterliegen. Bei Ansprechen der Alarm- und Notrufeinrichtungen werden die Meldungen über das Datennetz zu den bestimmungsgemäßen Informationssenken, wie beispielsweise Feuerwehr oder Polizei, übertragen. Der zyklische Informationsaustausch (Pollingverfahren) wird also auch dazu verwendet, um die Betriebsbereitschaft der Alarm- und Notrufeinrichtungen ständig zu kontrollieren, so dass ein fehlender Antwortzyklus sofort als Störung ausgewertet und signalisiert werden kann. Bei wirklichen Alarmfällen kann dem Antwortzyklus eine entsprechende Information zugefügt werden. Damit kann die gleiche Sicherheit wie beim Betreiben der Alarm- oder Notrufeinrichtungen über Standleitungen oder Temex gewährleistet werden.

Für den privaten Bereich ist beispielsweise aus dem DE 299 11 748.0 U1 eine Anordnung zur Erkennung von Bränden mit wenigstens einem Gassensor und einer elektronischen Auswerteschaltung, in welcher eine Signalaufbereitung der Ausgangssignale durch Vergleich mit Brandmustern erfolgt, bekannt. Im einzelnen ist eine Alarmierung bei Erreichen eines Schwellwertes vorgesehen und der Alarmzustand wird als Datensignal, vorzugsweise im SMS-Verfahren, über Anschlussmittel an ein GSM-Modem und von diesem über ein Mobilfunknetz an eine Leitstelle übertragen. Nach Inbetriebnahme wird sofort eine Verbindung zwischen Anordnung und Leitstelle aufgebaut und durch Fernwirksignale wird der Modus eingestellt, d.h. Art des brennbaren Materials und Zeitabstand für zyklische Statusmeldungen. Eine Weiterleitung der in der Leitzentrale empfangenen SMS-Meldungen ist dabei nicht vorgesehen.

Weiterhin ist für den privaten Bereich aus dem DE 297 09 023.2 U1 eine Vorrichtung zur Meldung von Pegel- und Betriebszuständen bekannt, bei der die Betriebsfähigkeit der zu überwachenden Anlage registriert, der jeweilige Zustand durch einen Messfühler erfasst und bei Über- oder Unterschreitung eines vorgegebenen Wertes bzw. bei Ausfall der Anlage auf dem Funkweg über ein bestehendes mobiles Funknetz oder über ein separates, eigens für diesen Zweck eingerichtetes Funknetz eine Alarmierung an einen oder mehrere Empfänger erfolgt. Hierzu weist die Anordnung u.a. ein Wählgerät und ein Funkgerät auf. Als Funkgerät sind sowohl alle handelsüblichen mobilen Telefone, welche über die jeweils vorhandenen öffentlichen Funknetze betrieben werden, als auch auf speziellen Frequenzen arbeitenden Funkgeräte, z.B. Betriebsfunk, Cityruf, geeignet. In dem Wählgerät können mehrere Empfängernummern gespeichert sein, welche - je nach vorheriger Vereinbarung - einzeln oder alle nacheinander über das Funkgerät angewählt werden.

Um eine gezielte Informationsübertragung mit der Gewißheit, dass die übertragene Information auch empfangen wurde, zu ermöglichen, ist aus der DE 195 49 008 C2 ein Verfahren zum bestätigten Gruppenruf in einem regional gegliederten GSM-Mobilfunknetz bekannt. Das GSM-Mobilfunknetz weist Mobilstationen, Basisstationen, Vermittlungseinrichtungen und zumindest eine durch eine Verbindungskontrolleinheit realisierte Übergangsschnittstelle in ein Datenübertragungsnetzwerk auf. Im einzelnen wird durch eine der Verbindungskontrolleinheit in einer oder mehreren Regionen des GSM-Mobilfunknetzes ein Rundruf mit aus dem Datenübertragungsnetzwerk erhaltenen Daten veranlaßt, wobei durch zumindest einen Teil der im Rundruf enthaltenen Daten eine Gruppe von Mobilstationen angesprochen wird. Von den angesprochenen Mobilstationen wird an die zumindest eine Verbindungskontrolleinheit jeweils eine Bestätigungsmeldung übermittelt. Die Ausgestaltung eines Gruppenrufes, wobei die Gruppen erst durch die in einem Rundruf enthaltenen Daten gebildet werden, ermöglicht es erstens, sehr schnell eine große Anzahl von Mobilstationen zu erreichen, und zweitens mit einer Bestätigung des Empfangs der im Rundruf enthaltenen Daten eine höhere Sicherheit der Datenübertragung zu erreichen. Dabei ist vorgesehen, dass nach Auswerten der Bestätigungsmeldungen der Gruppenruf durch Aussenden eines wiederholten Rundrufes gezielt wiederholt werden kann. Die Gruppenbildung kann anhand einer Adreßinformation in den empfangenen Daten oder den Informationsgehalt der empfangenen Daten erfolgen. Dabei bewerten oder weiterverarbeiten die Mobilstationen nach Empfang des Rundrufs zumindest einen Teil der im Rundruf enthaltenen Daten und abhängig vom Bewertungsergebnis bzw. Weiterverarbeitungsergebnis wird die Bestätigungsmeldung an eine Verbindungskontrolleinheit oder an einen bestimmten Adressaten im Datenübertragungsnetzwerk abgesetzt. Bei der Wahl des Kanals für den Rundruf kann auf einen einzelnen Rundrufkanal oder einen Rufkanal zurückgegriffen werden. Wird der Rufkanal zum Aussenden des Rundrufes genutzt, kann gleichzeitig eine Vorselektion durch eine Untergruppenbildung innerhalb des Rufkanals vorgenommen werden, wodurch es möglich ist, den Kreis der adressierten Mobilstationen vorab einzuschränken. Diese Einschränkung des Rundrufes kann auch dadurch erfolgen, dass der Rundruf nur über bestimmte Basisstationen, die anhand von regionalen Gesichtspunkten ausgewählt wurden, ausgesendet wird. Im einzelnen kann die Bestätigungsmeldung über einen Kanal mit zufälligem Zugriff abgesetzt werden, wodurch eine sehr schnelle Antwort möglich ist und bei einer wiederholten Aussendung des Rundrufes die benötigte Zeit für den bestätigten Gruppenruf verringert wird. Da eine Bestätigungsmeldung über' einen Kanal mit zufälligen Zugriffen nur über eine sehr eingeschränkte Bitrate verfügt, enthält diese Bestätigungsmeldung lediglich Angaben über die Identität der Mobilstation oder die des empfangenen Rundrufes oder auch nur über eine Adresse des Bestätigungsempfängers. Es können auch mehrere dieser Informationen kombiniert werden. Soll eine größere Anzahl von Informationen in diese Bestätigungsmeldung integriert werden, wird die Bestätigungsmeldung wiederholt abgesetzt oder es wird eine Zuweisung eines weiteren Kanals beantragt. Schließlich kann die Aussendung des Rundrufes oder auch der Bestätigungsmeldung verschlüsselt erfolgen. Damit werden diese Meldungen nur für einen eingeschränkten Empfängerkreis auswertbar. Hierzu kann ein sogenannter Selektor in der Mobilstation vorgesehen werden, welcher die im Rundruf enthaltenen Daten verarbeitet, indem zumindest Teile der Daten mit einer vorgebbaren Maske verglichen werden. Eine ähnlich selektive Verarbeitung von Bestätigungsmeldungen ist auch in der Verbindungskontrolleinheit oder bei einem Adressaten im Datenübertragungsnetzwerk möglich.

Schließlich ist aus der DE 196 54 859 C1 ein Verfahren und eine Schaltungsanordnung zur Ausgabe von Alarmierungsmeldungen und/oder Prozessdaten aus einer Alarmsteuerung und zur Weiterleitung der Alarmierungsmeldungen und/oder Prozessdaten an eine autorisierte Person bekannt. Im einzelnen ist hierzu ein Modem vorgesehen, das die Alarmierungsmeldungen und/oder Prozessdaten für die autorisierte Person an ein Mobilfunknetz eines Netzbetreibers der autorisierten Person weiterleitet. Die Alarmierungsmeldungen und/oder Prozessdaten werden als Kurzmeldungen (beispielsweise im Format des Short Message Service SMS) über ein Telekommunikationsnetz an den Netzbetreiber übermittelt und der Netzbetreiber speichert die Kurzmeldung in einer Mailbox für die zur Entgegennahme der Alarmierungsmeldungen und oder Prozessdaten autorisierten Person wenigstens solange, bis die autorisierte Person den Empfang der Alarmierungsmeldung bestätigt hat. Weiterhin protokolliert der Netzbetreiber die Zeitpunkte des Empfangs und der Weiterleitung der Kurzmeldung an die autorisierte Person sowie den Inhalt der Meldung automatisch und stellt dieses für Dokumentationszwecke zur Verfügung. Als Alarmeinrichtungen fungieren dabei Steuerungen von stationären oder mobilen Anlagen, wobei die Steuerung und Überwachung der Anlagen über Steuerund Signalleitungen erfolgt. Bei einem alarmierenden Betriebszustand einer Anlage meldet die betreffende Steuerung über einen Datenbus einen Alarm an die Alarmsteuerung. Diese empfängt den Alarm, wertet diesen durch Ablauf eines hinterlegten Alarmierungsprogramms aus und löst in der Folge die Weiterleitung des Alarmes an eine bestimmte Person aus, deren Namen und Rufnummer im Datenspeicher der Alarmsteuerung gespeichert ist. Dies erfolgt automatisch über das Modem, das drahtgebunden an ein Fernsprechnetz oder als funkübertragendes Modem über eine angeschlossene Mobileinrichtung an ein Mobilfunknetz angeschlossen ist. Die zu benachrichtigende Person erhält die Meldung an einem Telefon mit Fetznetzanschluss, Mobiltelefon, Fax-Gerät oder. PC. Innerhalb einer vorgegeben Zeit muss die jeweilige Person wiederum über das Fernsprech- oder Mobilfunknetz den Erhalt der Meldung an die Alarmsteuerung bestätigen, wobei in der Alarmsteuerung der Reaktionszeitraum festgelegt werden kann. Andernfalls wird an die betreffende Person eine Kurzmeldung an deren Mailbox gesendet.

Wie die vorstehende Würdigung des Standes der Technik aufzeigt, sind verschiedene Ausführungsformen von Alarmierungssystemen bekannt. Wenig Beachtung fand jedoch der Personenkreis der Freiwilligen Feuerwehren, Technisches Hilfswerk, Bergwacht, freiwillige Sanitäter u.a. Hier ist je nach Notfall in einer bestimmten Region der gesamte oder nur ein Teil des bestimmten Personenkreises zu alarmieren. In der Regel ist eine Mindeststärke der Besatzung ausreichend, entscheidend ist, dass diese Mindeststärke möglichst schnell erreicht wird. Bedingt durch die Konzeption können bekannte Alarmierungssysteme diese Anforderungen mit kostengünstigem Aufwand nicht erfüllen. Deshalb fehlen in der Praxis kostengünstige Alarmierungssysteme, welche die schnelle Alarmierung einer Mindestpersonenzahl sicherstellen. Besonders bedeutsam ist dies, weil die Telekommunikationsindustrie als äußerst fortschrittliche, entwicklungsfreudige Industrie anzusehen ist, die sehr schnell Verbesserungen und Vereinfachungen aufgreift und in die Tat umsetzt.

Der Erfindung liegt gegenüber den bekannten Alarmierungssystemen die Aufgabe zugrunde, dieses kostengünstig derart auszugestalten, dass eine rasche und zuverlässige Weiterleitung von Alarmmeldungen und die Alarmierung einer Mindestzahl von Personen sichergestellt werden.

Diese Aufgabe wird beim erfindungsgemäßen Alarmierungssystem gelöst indem,
a) die Alarmmeldung der jeweiligen Alarmeinrichtung drahtlos oder drahtgebunden zu einer Alarmempfangseinrichtung in einer Alarmzentrale übermittelt wird,
b) die Alarmempfangseinrichtung eine Steuereinrichtung zur Auswertung der Alarmmeldung nach Alarminhalt und voraussichtlich benötigter Zeitdauer für die Alarmierung sowie eine damit in Verbindung stehende Mobileinrichtung und/oder ein Funkmodem zur automatischen Weiterleitung der Alarmmeldung an die Mobilstationen oder des Fernsprechnetzes aufweist und
c) die angesprochenen Mobilstationen oder Teilnehmerendeinrichtungen eine Bestätigungsmeldung oder ein Quittungssignal zur Alarmempfangseinrichtung übermitteln, welche die Anzahl von Bestätigungsmeldungen oder Quittungssignalen zählt, um die Alarmierung einer Mindestpersonenzahl sicherzustellen.

Das erfindungsgemäße Alarmierungssystem weist den Vorteil auf, dass durch die Nutzung der privaten Festnetztelefone und Handys der Feuerwehrleute, THW-Helfer, Sanitäter, Bergwacht, Rettungsdienste u.a. auf überraschend einfache Art und Weise eine zusätzliche Möglichkeit zur raschen und dennoch preisgünstigen Alarmierung besteht. Entsprechend der verschiedenen Alarme kann die jeweils zu alarmierende Gruppe gerufen werden, z.B. bei einem Autounfall mit im Fahrzeug eingeklemmten Personen, jene Helfer die in der Handhabung von Rettungsscheren ausgebildet sind, bei Ertrunkenen Helfer mit Tauchausbildung usw. Die handelsüblichen Meldeempfänger des Alarmierungssystemes BOS für Feuerwehren sind relativ teuer (ca. 800,-- DM), so dass die Gemeinden die Freiwilligen Feuerwehren nur spärlich mit Meldeempfängern ausstatten (derzeit ca. 20 % in der Bundesrepublik Deutschland). Im Vergleich dazu besitzt jeder Haushalt ein Festnetztelefon und die Anzahl von ca. 20 Millionen Mobilfunkteilnehmer Ende 1999 wird sich bis Ende 2000 nochmals verdoppeln. Dabei spielt es keine Rolle, welcher Mobilfunkbetreiber (D1, D2, E-Plus, Viag-Intercom usw.) oder welches Fernsprechnetz oder Datennetz genutzt wird, sondern der gerufene Teilnehmer oder die Dienstzentrale (öbL, nöbL, Cityruf) sollte in irgendeiner Form - sei es durch Abheben des Hörers, Rücksendung eines Tones oder einer Meldung - den Empfang quittieren. Bei einer Quittierung durch die Dienstzentrale ist in der Regel davon auszugehen, dass die Alarmmeldung auch an den gerufenen Teilnehmer weitergeleitet wird. Durch das erfindungsgemäße Alarmierungssystem, welches zusätzlich zum bereits Bestehenden installiert werden kann, kann eine fast hundertprozentige Erreichbarkeit (im Vergleich zu derzeit höchstens zwanzigprozentige Erreichbarkeit in der ersten Alarmierungsstufe) gewährleistet werden. Es entfällt auch die Notwendigkeit, dass derjenige, welcher über den Meldeempfänger erreicht wurde, nun erst noch die anderen Feuerwehrleute alarmieren muß, sondern er kann unverzüglich zur Feuerwache fahren.

Da jede Freiwillige Feuerwehr mindestens einen Meldeempfänger benötigt, kann die Auslösung des Alarms im erfindungsgemäßen Alarmierungssystem direkt vom Meldeempfänger abgeleitet werden; entweder vom vorhandenen Alarmkontakt oder durch akustische Kopplung, so dass zur Einbindung des erfindungsgemäßen Alarmierungssystemes kein zusätzlicher Aufwand erforderlich ist. Weiterhin ist von Vorteil, dass auch hinsichtlich des Standorts das erfindungsgemäße Alarmierungssystem keine Beschränkungen unterliegt. Wenn die Empfangsbedingungen für GSM/BOS am Feuerwehrhaus der jeweiligen Freiwilligen Feuerwehr nicht optimal sind, kann die Alarmempfangseinrichtung auch an einem anderen Standort, beispielsweise im Haus des Feuerwehrkommandanten, bei einer benachbarten Feuerwehr u.a. installiert werden. Infolge der erfindungsgemäßen Konzeption des Alarmierungssystemes ist dessen Funktion unabhängig vom Aufbauort der Alarmempfangseinrichtung.

Bei einer bevorzugten Ausgestaltung der Erfindung gemäß Patentanspruch 2, weist die Alarmempfangseinrichtung einen mit der Steuereinrichtung verbundenen Rufnummernspeicher auf und die Steuereinrichtung übernimmt auch die Funktion eines Wählautomaten und einer Zeitgeberschaltung, wobei die Steuereinrichtung nach Maßgabe der Alarmmeldung für die Alarmierung die Gruppen zusammenstellt, die Rufnummern aus bestimmten Speicherbereichen ausliest, den Ruf mehrfach wiederholt und bei fehlender Bestätigungsmeldung in bestimmtem Zeitabstand eine erneute Weiterleitung der Alarmmeldung einleitet.

Diese Ausgestaltung der Erfindung weist den Vorteil auf, dass dem Benutzer ein hoher Bedienkomfort geboten wird, da dieser in gewohnter Weise die Wählhilfen, wie z.B. eine automatische Wähleinrichtung, zur Eingabe der Verbindungsdaten und Nachrichten für die zu alarmierende Person mitbenutzen kann. Somit kann der Benutzer ohne spezielle Kenntnisse die vom erfindungsgemäßen Alarmierungssystem bereitgestellten Möglichkeiten für seine Aufgaben und Anwendungen nutzbar machen, beispielsweise Dokumentation von Datum und Uhrzeit des Alarms. Die für die verschiedenen Funktionen erforderlichen Eingabebefehle werden dem Benutzer automatisch im Dialogverfahren angeboten, d.h. von der Steuereinrichtung erzeugt und beispielsweise akustisch ausgegeben, z.B. Eingabeformate für Rufnummern, Alarmtexte usw.. Entsprechend der verschiedenen Alarme wird automatisch die jeweils zu alarmierende Gruppe gerufen. Damit ist trotz der Funktionsvielfalt, insbesondere der Alarmempfangseinrichtung, die Akzeptanz des Benutzers gegeben.

Gemäß Patentanspruch 3, weist der Rufnummernspeicher einen Speicherbereich für die Rufnummer der Mobileinrichtung und/oder der Alarmzentrale auf.

Wird im Falle einer Alarmierung die Alarmmeldung mit dieser Rufnummer ausgegeben, so ist sowohl die eindeutige Identifizierbarkeit als auch die rasche Information der zu alarmierenden Person gegeben.

In Weiterbildung der Erfindung weist, gemäß Patentanspruch 4, die Alarmempfangseinrichtung einen Zwischenspeicher mit mindestens zwei Speicherbereichen auf und - nach Auswertung und Signalumformung der Alarmmeldung - werden im einen Speicherbereich eine SMS-Meldung und im anderen Speicherbereich eine Sprachmeldung gespeichert.

Diese Weiterbildung der Erfindung weist den Vorteil auf, dass zwei verschiedene Signalisierungs- bzw. Alarmierungsarten beliebig kombinierbar sind. Wahlweise kann an die zu alarmierende Person eine numerische oder alphanumerische (Textnachricht) oder gesprochene Nachricht (Sprachansage) ausgegeben werden. Die Pflege der Rufnummern bzw. Alarmmeldung (d.h. welcher Personenkreis bei Alarm angerufen wird) kann beispielsweise über ein Mobiltelefon der jeweiligen Feuerwehr oder über einen PC (Windows) erfolgen.

Vorzugsweise erkennt, gemäß Patentanspruch 5, die Steuereinrichtung, ob die Mobilstation als GSM-Mobilstation oder als Funkrufempfänger oder ob die Teilnehmerendeinrichtung als ISDN-Teilnehmereinrichtung ausgestaltet ist und stellt jeweils eine Gruppe zusammen, und die Alarmempfangseinrichtung leitet als Alarmmeldung zunächst eine SMS-Meldung über die Vermittlungseinrichtungen des GSM-Mobilfunknetzes oder die Funkrufzentrale oder die Vermittlungsstelle des Fernsprechnetzes weiter.

Das Abschicken einer SMS-Meldung dauert ca. 2 Sekunden, so dass pro Minute beispielsweise ca. 30 Feuerwehrleute alarmiert werden können. Die Netzbetreiber garantieren bei SMS-Meldungen keine festen Übertragungszeiten. Untersuchungen und empirische Ermittlungen zeigen jedoch auf, dass 90 % der SMS-Meldungen innerhalb einer Minute ankommen. Hinzukommt, dass die Netzbetreiber aufgrund der guten Nutzung des SMS-Dienstes, diesen verstärkt ausbauen und mittlerweile einen "SMS-Multi-Message-Dienst" bieten, bei dem eine SMS-Meldung gleichzeitig an 10 Teilnehmer verschickt werden kann. Weiterhin ist von Vorteil, dass bei nur SMS-Meldung dies ein reiner Datenvertrag mit Grundgebühren von ca. 20,-- DM pro Monat ist. Eine SMS-Meldung kostet dann im Netz des eigenen Netzbetreibers ca. 3 Pfennige und in das eines anderen Mobilfunknetzes ca. 24 Pfennige. Beispielsweise ergeben sich bei 30 Feuerwehrleuten und 5 Alarmierungen pro Monat Gesamtkosten an Verbindungsgebühren im Netz des eigenen Providers von ungefähr 300,-- DM pro Jahr.

In Weiterbildung der Erfindung wertet, gemäß Patentanspruch 6, die Steuereinrichtung aus, ob die Mobilstationen oder die Teilnehmerendeinrichtungen den Empfang der SMS-Meldung oder des Sprachrufes (Alert-Modus) ablehnen und zählt dieses Ablehnen als Bestätigungsmeldung.

Diese Weiterbildung der Erfindung weist den Vorteil auf, dass durch die Nutzung des Alertmodus auf einfache Art und Weise eine schnelle und kostenfreie Alarmierung geschaffen wird.

Vorzugsweise zählt, gemäß Patentanspruch 7, die Steuereinrichtung, ob mindestens zwei leere Speicherbereiche im Rufnummernspeicher aufeinanderfolgen und bricht in diesem Fall die Weiterleitung von Alarmmeldungen ab.

Durch diese Ausgestaltung wird die Suche nach Alarmeinträgen rasch beendet.

Gemäß Patentanspruch 8, liest die Alarmempfangseinrichtung im Falle einer fehlenden Bestätigungsmeldung für eine SMS-Meldung die zugehörige Sprachmeldung aus und übermittelt diese zu derselben Mobilstation oder Teilnehmerendeinrichtung.

Von Vorteil ist, dass der Ansagetext beliebig gestaltet werden kann, wobei auch die Wahl zwischen verschiedenen Ansagetexten ermöglicht wird. Die Ansage kann auch mehrmals wiederholt werden und zusätzlich eine vorher vereinbarte Alarmnummer enthalten.

In Weiterbildung der Erfindung ist, gemäß Patentanspruch 10, die Alarmempfangseinrichtung Bestandteil eines mit einer Nebenstellenanlage oder Teilnehmerendeinrichtung in Verbindung stehenden Verbindungsgeräts, welches wie ein Endgerät an die Nebenstellenanlage und/oder die Amtsleitung angeschlossen wird und einem Anrufer aus dem Funknetz die direkte Durchwahl zu jeder Nebenstelle der Nebenstellenanlage ermöglicht, wobei das Verbindungsgerät in die Betriebsarten "Nur-Alarmempfang" oder "Mischbetrieb Alarmempfänger" umsteuerbar ist und als Rufnummernspeicher für die automatische Weiterleitung der Alarmmeldung, die SIM-Karte der Mobileinrichtung und/oder ein Rufnummern- und Befehlsspeicher des Verbindungsgeräts mitbenutzt wird.

Diese Weiterbildung der Erfindung weist den Vorteil auf, dass das Verbindungsgerät über das zusätzliche Leistungsmerkmal Alarmfunktion verfügt, wobei der zusätzliche Aufwand aufgrund der Vorleistung für verschiedene Funktionen hierfür gering ist.

Weitere Vorteile und Einzelheiten lassen sich der nachfolgenden Beschreibung einer bevorzugten Ausführungsform der Erfindung unter Bezugnahme auf die Zeichnung und den Unteransprüchen entnehmen. In der Zeichnung zeigt:

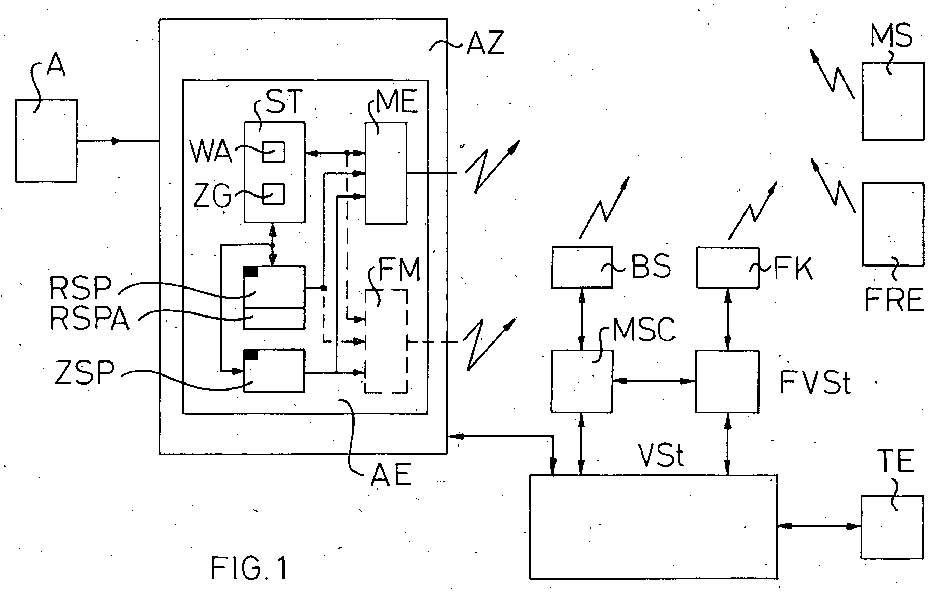

- FIG. 1: im Detail die Alarmzentrale und die Netzstruktur mit Einbindung von Mobilstation und Teilnehmerendeinrichtungen im erfindungsgemäßen Alarmierungssystem.

Die in FIG. 1 gezeigte Netzstruktur zeigt sowohl das Mobilfunknetz als auch das Fernsprechnetz. Das Mobilfunknetz für den City-Rufdienst oder europäischen Funkrufdienst (Alphapage in Frankreich, Teledrine in Italien, Europage in Großbritannien) besteht aus Funkvermittlungsstellen FVSt, Funkkonzentratoren FK mit abgesetzten Sendern und Funkruf-Mobilstationen FRE. Bei einem GSM-Mobilfunknetz, wie dies beispielsweise in der DE 195 49 008 C2 beschrieben ist, weist dieses Vermittlungseinrichtungen MSC, Basisstationen BS und GSM-Mobilstationen MS auf. Die Funkvermittlungsstellen FVSt bzw. Vermittlungseinrichtungen MSC verwalten die Teilnehmerdaten und steuern die Sender an, über welche ein Ruf ausgestrahlt werden soll. Der Zugang vom Fernsprechnetz mit den Vermittlungsstellen VSt zum Funkrufnetz bzw. GSM-Mobilfunknetz erfolgt stets unter einer bestimmten Zugangskennzahl. Auch wenn die Ausgestaltung des erfindungsgemäßen Alarmierungssystemes anhand der vorstehenden Anwendungen und nachfolgend für den Einsatz bei der Freiwilligen Feuerwehr beschrieben ist, so ist der Einsatz auch in anderen Nachrichtennetzen für vermittelte Verbindungen möglich. Dies ist darauf zurückzuführen, dass das erfindungsgemäße Konzept auf Vorleistungen in Nachrichtennetzen für vermittelte Verbindungen aufbaut und die einfache Anpassung an die jeweiligen Gegebenheiten und Einbindung ohne Änderung der Erfindung bzw. des Grundkonzepts erlaubt.

Beim erfindungsgemäßen Alarmierungssystem wird die Alarmmeldung von einer Alarmeinrichtung A, z.B. Feuermelder drahtlos oder drahtgebunden zu einer Alarmempfangseinrichtung AE in einer Alarmzentrale AZ, d.h. Feuerwache übermittelt. Die Alarmempfangseinrichtung AE weist eine Steuereinrichtung ST zur Auswertung der Alarmmeldung und eine damit in Verbindung stehende Mobileinrichtung ME und/oder ein Funkmodem FM zur automatischen Weiterleitung der Alarmmeldung an mindestens eine Mobilstation MS und/oder mindestens eine Teilnehmerendeinrichtung TE des Fernsprechnetzes auf. Weiterhin sind in der Alarmempfangseinrichtung AE ein mit der Steuereinrichtung ST verbundenen Rufnummernspeicher RSP angeordnet: Die Steuereinrichtung ST weist zusätzlich auch die Funktion eines Wählautomaten WA und einer Zeitgeberschaltung ZG auf und liest nach Maßgabe der Alarmmeldung zur Gruppenbildung Rufnummern aus bestimmten Speicherbereichen sowie aus einem Speicherbereich RSPA die Rufnummer der Mobileinrichtung ME und/oder der Alarmzentrale AZ aus und wiederholt den Ruf mehrfach. Die angesprochenen Mobilstationen MS oder Teilnehmerendeinrichtungen TE übermitteln eine Bestätigungsmeldung oder ein Quittungssignal zur Alarmempfangseinrichtung AE, wobei die Anzahl von Bestätigungsmeldungen bzw. Quittungssignale gezählt wird. Bei fehlender Bestätigungsmeldung bzw. fehlendem Quittungssignal wird in bestimmtem Zeitabstand eine erneute Weiterleitung der Alarmmeldung eingeleitet. Im Falle von Funkrufempfängern FRE, können diese entweder zusätzlich einen Sender für das Senden des Quittungssignals aufweisen oder die Alarmempfangseinrichtung AE setzt den Alarmzyklus fort und zählt die Anzahl der Rückrufe des jeweiligen Funkrufempfängers FRE als Quittungssignal innerhalb einer einstellbaren Zeitdauer (wahlweise mit oder ohne Identifizierung, beispielsweise durch die Rufnummer des Funkrufempfängers).

Weiterhin weist die Alarmempfangseinrichtung AE einen Zwischenspeicher ZSP mit mindestens zwei Speicherbereichen auf, wobei - nach Auswertung und Signalumformung der Alarmmeldung - im einen Speicherbereich eine SMS-Meldung und im anderen Speicherbereich eine Sprachmeldung (nachfolgend Voice-Alarmmeldung genannt) gespeichert werden.

Die Steuereinrichtung ST erkennt, ob die Mobilstation MS als GSM-Mobilstation oder als Funkrufempfänger FRE oder ob die Teilnehmerendeinrichtung TE als ISDN-Teilnehmereinrichtung ausgestaltet ist und die Alarmempfangseinrichtung AE leitet in diesem Fall als Alarmmeldung zunächst eine SMS-Meldung über die Vermittlungseinrichtungen MSC des GSM-Mobilfunknetzes oder die Funkrufzentrale FVSt oder die Vermittlungsstelle VSt des Fernsprechnetzes weiter.

Im folgenden wird der Alarmmodus "Feuerwehr" im einzelnen näher beschrieben und erläutert. Der Alarmeintrag erfolgt im als Telefonbuch ausgestalteten Rufnummernspeicher RSP und zwar im Namensfeld des Teilnehmers MS, FRE, TE. Nach dem Namen des Teilnehmers kann durch den Eintrag "!S" eine SMS-Alarmmeldung, durch "!V" eine Voice-Alarmmeldung oder durch "!C" eine kombinierte Alarmmeldung (zunächst SMS-Alarmmeldung; in der nächsten Ansagerunde Voice-Alarmmeldung) ausgewählt werden.

Bei SMS-Alarm wird die Nachricht, die im SMS-Speicherplatz 1 gespeichert ist, an die Rufnummer des zu benachrichtigenden Teilnehmers MS, FRE, TE geschickt. Nach positiver Quittierung des Empfangs der Nachricht durch die SMS-Dienstzentrale wird die nächste Alarmmeldung ausgegeben. Auf Wunsch kann auch der Inhalt eines anderen SMS-Speicherplatzes ausgegeben werden. Dazu ist die Nummer des gewünschten SMS-Speicherplatzes an den Teilnehmernamen anzuhängen. Es können die Speicherplätze 1 bis 14 gewählt werden. Die Speicherplätze 10 bis 14 werden dabei durch die Hex-Ziffern "A" bis "E" repräsentiert.

Bei Voice-Alarm gibt es zwei Betriebsmodi, den Ansage- und den Alertmodus. Im Ansagemodus muß der angerufene Teilnehmer MS, FRE, TE die Verbindung annehmen und die Ansage anhören. Die Ansage besteht aus einem kurzen Ton oder Tonfolge und der Ansage "Alarm". Dieser Text kann auch durch einen anderen Text ersetzt werden, beispielsweise kann die Ansage zusätzlich eine Alarmnummer enthalten (z.B.: "Alarm Nummer 5"), wodurch beispielsweise die Art des Alarms signalisiert wird. Die Unterscheidungsmöglichkeit ist auch durch den Ton oder die Tonfolge möglich. Die Ansage wird mehrfach, beispielsweise zwei Mal wiederholt. Anschließend wird die Verbindung durch die Alarmempfangseinrichtung AE beendet, wobei der angerufene Teilnehmer MS, FRE, TE die Verbindung nach der ersten Ansage von "Alarm" beenden kann.

Der Alertmodus bietet im wesentlichen zwei Vorteile. Er ist schneller und außerdem kostenfrei. Im Alertmodus genügt für die Signalisierung, dass das angerufene Endgerät MS, FRE, TE den Anruf über "Alerting" quittiert. Eine Meldung des Teilnehmers ist nicht erforderlich. Voraussetzung für die erfolgreiche Nutzung des Alertmodus ist jedoch, daß das Endgerät MS, FRE, TE die Rufnummer des angerufenen Teilnehmers identifiziert und gleichzeitig die Funktion "Anklopfen" aktiviert ist. Diese Bedingungen sind in der Regel mit Mobiltelefonen und ISDN-Festnetzanschlüssen zu erfüllen. Im Alertmodus wird dem angerufenen Teilnehmer MS, FRE, TE signalisiert, wenn ein Anruf von der Alarmempfangseinrichtung AE vorliegt und dies sogar während eines laufenden Gesprächs. Zur Vermeidung von Mißverständnissen ist es sinnvoll, die Rufnummer der Alarmempfangseinrichtung AE mit einem eindeutigen Namenseintrag, z.B. "Alarm, Feuerwehr" zu verknüpfen.

Der angerufene Teilnehmer kann den Alarmruf ablehnen. Wird der Alarmruf nicht manuell abgelehnt, so endet er automatisch nach beispielsweise drei Ruftönen. Im ersten Fall kann die Alarmempfangseinrichtung AE sofort die nächste Verbindung aufbauen. Der angerufene Teilnehmer kann den Alarm auch annehmen und den Ansagetext anhören. In diesem Fall ist die Verbindung allerdings kostenpflichtig. Im Alertmodus kann der angerufene Teilnehmer die Verbindung jederzeit abbrechen, ohne daß ein neuer Anruf erfolgt. Der Alertmodus wird durch Anfügen der Option "K" (nur Klingeln) an den Alarmeintrag ausgewählt.

Die Alarmnachrichten werden vorzugsweise in der Reihenfolge des Eintrags im Telefonbuch bzw. in der Reihenfolge des Gruppeneintrags bearbeitet. Die derzeit gebräuchlichen SIM-Karten verfügen über die Telefonbuchplätze 1 bis 125, so dass in dieser Einstellung maximal 125 Alarmeinträge, sofern nicht bestimmte Speicherplätze werkseitig vorbelegt sind, möglich sind. Die Suche nach Alarmeinträgen wird beispielsweise nach zwei oder drei leeren Speicherplätzen in Folge beendet.

SMS-Nachrichten werden gegenüber Sprachnachrichten bevorzugt behandelt. Bei einer Voice-Alarmmeldung kann man davon ausgehen, dass der Gesprächsaufbau und die Sprachübermittlung ca. 25 Sekunden dauert. Damit können pro Minute und pro Funkkanal ca. zwei Personen alarmiert werden. Existiert ein Festnetzanschluß (analoges oder ISDN-Telefon) können parallel zum Funkkanal auch Festnetzverbindungen aufgebaut werden, so dass pro Minute und pro Funkkanal ca. vier Personen alarmiert werden können. Nach Aussenden aller SMS-Nachrichten werden die verbleibenden Nachrichten in der Reihenfolge des Telefonbuchs bearbeitet. Kommt es beim Senden einer SMS-Nachricht zu einer negativen Quittung, erfolgt in der nächsten Ansagerunde ein Voice-Alarm an dieselbe Rufnummer.

Die Alarmempfangseinrichtung AE wiederholt die Alarmierung bis alle eingegebenen Teilnehmer erreicht wurden. Es ist jedoch auch möglich, die Alarmierung nach Ablauf einer Maximalzeit zu beenden, nach der eine Alarmierung nicht mehr sinnvoll erscheint, beispielsweise nach 30 Minuten.

Die Programmierung der Alarmeinträge ins Namensfeld des Telefonbuchs kann folgenden Syntax aufweisen
Name![Alarmmodus]([Optionen])

Alarmmodi sind:
- V: Alarmierung mit Sprachansage (Voice)
- S: Alarmierung mit SMS
- C: Combi-Alarm (in der ersten Ansagerunde Alarmierung mit SMS, in der nächsten Ansagerunde Alarmierung mit Sprachansage)

Optionen sind:
- K: Alertmodus (Der Alarm gilt bereits als erfolgreich abgesetzt, wenn es beim angerufenen Teilnehmer klingelt)
- L: Längere Wartezeit (Die Zeitdauer des Ruftons beim angerufenen Teilnehmer wird verlängert)
- F: Festnetz (Der Alarm wird vorzugsweise über das Festnetz abgesetzt)
- 1 .. 9: Text der SMS-Mitteilung aus SMS-Speicher 1 bis 9
- A .. E: Text der SMS-Mitteilung aus SMS-Speicher 10 bis 14

Bei Modus "C" können alle Optionen eingegeben werden. Die Reihenfolge der Zeichen ist beliebig und es wird nicht zwischen Groß- und Kleinbuchstaben unterschieden. Optionen, die in bestimmten Kombinationen nicht sinnvoll sind (z.B.: !SF) werden ignoriert.

Der Zeitbedarf kann bei den derzeit in Betrieb befindlichen Mobilfunknetzen wie folgt geschätzt werden:

| | |
|---|---|
| Auslesen eines Telefonbucheintrags | ca. 100 ms |
| Abschicken einer SMS-Nachricht an Dienstzentrale | ca. 700 ms (systemabhängig) |
| Absetzen eines Voice-Alarmes | 15 bis 30 s (systemabhängig) |
| Dauer einer SMS-Nachricht bis zum Empfänger | 5 bis 15 s (systemabhängig) |

Schließlich kann die Alarmempfangseinrichtung AE Bestandteil eines mit einer Nebenstellenanlage oder Teilnehmerendeinrichtung in Verbindung stehenden Verbindungsgeräts sein, welches wie ein Endgerät an die Nebenstellenanlage und/oder die Amtsleitung angeschlossen wird und einem Anrufer aus dem Funknetz die direkte Durchwahl zu jeder Nebenstelle der Nebenstellenanlage ermöglicht. Als Rufnummernspeicher für die automatische Weiterleitung der Alarmmeldung wird die SIM-Karte der Mobileinrichtung ME und/oder ein Rufnummern- und Befehlsspeicher des Verbindungsgeräts mitbenutzt. Im Alarmmodus werden bei Erkennung des Alarms an alle Teilnehmer, die im Telefonbuch der SIM-Karte, d.h. im Rufnummernspeicher RSP einen Alarmeintrag aufweisen, Alarmnachrichten über SMS, Fax, E-Mail oder Sprachansage (Voice) verschickt.

Die Netzbetreiber bieten mittlerweile einen "SMS-Multi-Message Dienst"; hierüber kann eine SMS-Meldung gleichzeitig an 10 Teilnehmer verschickt werden.

Im Alarmmodus "Feuerwehr" ist zusätzlich der Betrieb als Mobiltelefon möglich. Dazu ist lediglich ein handelsübliches Analogtelefon an den Anschluss "Phone" des Verbindungsgeräts (beispielsweise ECOTELGSM der Fa. Vierling Electronics GmbH + Co. KG) anzustecken. Das Telefon kann auf Wunsch nur für abgehende oder nur für ankommende Gespräche freigegeben werden. Bei Vorliegen eines Alarms werden laufende Gespräche zwangsweise beendet.

Die folgenden Parameter geben eine günstige Bemessung der Einstellparameter für den Anwendungsfall "Freiwillige Feuerwehr" an.

Dauer des Alarmrufes

| | |
|---|---|
| Standardmodus | 20 Sekunden |
| Alertmodus | 15 Sekunden |
| Verlängerung des Rufes (Option L) | um 10 Sekunden |

In der Regel erfolgt ein Abbruch der Telefonbuchsuche nach beispielsweise zwei oder drei leeren Speicherplätzen.

Der Maximalwert für Zeitbegrenzungen ist jeweils 60 Sekunden.

Die folgenden Parameter sind über DTMF-Zeichen programmierbar. Der Default-Wert gibt die Werkseinstellung im Auslieferungszustand an.

| Parameter | Register | Wertebereich | Default |
|---|---|---|---|
| Start der Telefonbuchsuche | 8 | 1-125 | 1 |
| Zeitbegrenzung Alarmierung | 30 | 0-255 Minuten (0 bedeutet Zeitbegrenzung deaktiviert | 30 Minuten |
| Freigabe ankommende Gespräche | 0 | | Gesperrt |
| Freigabe abgehende Gespräche | 0 | | Gesperrt |
| Ansage Mobilfunknummer | 0 | | Deaktiviert |
| Ansage Alarmnummer | 20 | 0-999 (0 bedeutet deaktiviert) | Deaktiviert |

Das erfindungsgemäße Alarmierungssystem weist den Vorteil auf, dass eine fast hundertprozentige Erreichbarkeit (im Vergleich zu derzeit höchstens zwanzigprozentige Erreichbarkeit in der ersten Alarmierungsstufe) gewährleistet wird, die Alarmierung und Ausnutzung vorhandener Netze und Einrichtungen erfolgen kann und dass auch. eine nachträgliche Einbindung möglich ist. Dabei können vorhandene Leistungsmerkmale von Teilnehmereinrichtungen (z.B. das vorstehend genannte Verbindungsgerät), wie Kurzwahlspeicher, Benutzerführung über Sprachansage, Schutz der Programmierung über eine Geheimzahl, Wahlwiederholung, Neuwahl, Blockierung der Abfrageversuche bei Falscheingabe, feste Durchschaltung, Rufumleitung, Freigabe von Rufnummerngruppen, Begrenzung der Zeichenzahl für Wahl, Abfrage der aktuellen Funk-Feldstärke, des Chipkarten-Status oder des Netzstatus, Selbstlernmodus mit Messung von Impuls-/Pausenzeiten, Überwachung des Gesprächskanals, Amtsholung mitbenutzt werden. Die Alarmempfangseinrichtung AE kann sowohl die Zahl der erfolgreichen als auch die Zahl der erfolglosen Alarmweitergaben zählen und abspeichern. Bei Anwahl einer Rufnummer, die als besetzt gemeldet wurde, kann erst eine weitere Rufnummer und nach einer Pause (beispielsweise von zwei Minuten) die vormals besetzte Rufnummer angerufen werden. Die Aktualisierung der jeweiligen personenbezogenen Daten sowie die Konfiguration kann mittels Rechner vor Ort oder durch Fernsteuerung erfolgen.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann mittels unterbrechungsfreier Stromversorgung auch bei Stromausfall die Alarmierung gewährleistet; die Alarmauslösung kann auch durch einen Anruf von einer GSM-Mobilstation aus erfolgen (wahlweise mit PIN-Nummer verknüpft) einschließlich der Alarmierung einer bestimmten Gruppe u.a.

## Patentansprüche

1. Alarmierungssystem zur Weiterleitung von Alarmmeldungen von Alarmeinrichtungen über ein Mobilfunk-/Fernsprechnetz,
a) bei dem die Alarmmeldung der jeweiligen Alarmeinrichtung (A) drahtlos oder drahtgebunden zu einer Alarmempfangseinrichtung (AE) in einer Alarmzentrale (AZ) übermittelt wird,
b) bei dem die Alarmempfangseinrichtung (AE) eine Steuereinrichtung (ST) zur Auswertung der Alarmmeldung nach Alarminhalt und voraussichtlich benötigter Zeitdauer für die Alarmierung sowie eine damit in Verbindung stehende Mobileinrichtung (ME) und/oder ein Funkmodem (FM) zur automatischen Weiterleitung der Alarmmeldung an die Mobilstationen (MS) oder Teilnehmerendeinrichtungen (TE) des Fernsprechnetzes aufweist und
c) bei dem die angesprochenen Mobilstationen (MS) oder Teilnehmerendeinrichtungen (TE) eine Bestätigungsmeldung oder ein Quittungssignal zur Alarmempfangseinrichtung (AE) übermitteln, welche die Anzahl von Bestätigungsmeldungen oder Quittungssignalen zählt, um die Alarmierung einer Mindestpersonenzahl sicherzustellen.

2. Alarmierungssystem nach Anspruch 1, **dadurch gekennzeichnet, dass** die Alarmempfangseinrichtung (AE) einen mit der Steuereinrichtung (ST) verbundenen Rufnummernspeicher (RSP) aufweist, dass die Steuereinrichtung (ST) auch die Funktion eines Wählautomaten (WA) übernimmt und nach Maßgabe der Alarmmeldung für die Alarmierung die Gruppen zusammenstellt sowie die Rufnummern aus bestimmten Speicherbereichen ausliest und dass die Steuereinrichtung (ST) auch die Funktion einer Zeitgeberschaltung (ZG) übernimmt und den Ruf mehrfach wiederholt sowie bei fehlender Bestätigungsmeldung in bestimmtem Zeitabstand eine erneute Weiterleitung der Alarmmeldung einleitet.

3. Alarmierungssystem nach Anspruch **2, dadurch gekennzeichnet, dass** der Rufnummernspeicher (RSP) einen Speicherbereich (RSPA) für die Rufnummer der Mobileinrichtung (ME) und/oder der Alarmzentrale (AZ) aufweist.

4. Alarmierungssystem nach Anspruch 1, **dadurch gekennzeichnet, dass** die Alarmempfangseinrichtung (AE) einen Zwischenspeicher (ZSP) mit mindestens zwei Speicherbereichen aufweist und dass - nach Auswertung und Signalumformung der Alarmmeldung - im einen Speicherbereich eine SMS-Meldung und im anderen Speicherbereich eine Sprachmeldung gespeichert werden.

5. Alarmierungssystem nach Anspruch 1, **dadurch gekennzeichnet, dass** die Steuereinrichtung (ST) erkennt, ob die Mobilstation als GSM-Mobilstation (MS) oder als Funkrufempfänger (FRE) oder ob die Teilnehmerendeinrichtung (TE) als ISDN-Teilnehmereinrichtung ausgestaltet ist und stellt jeweils eine Gruppe zusammen und dass die Alarmempfangseinrichtung (AE) als Alarmmeldung zunächst eine SMS-Meldung über die Vermittlungseinrichtungen (MSC) des GSM-Mobilfunknetzes oder die Funkrufzentrale (FVSt) oder die Vermittlungsstellen (VSt) des Fernsprechnetzes weiterleitet.

6. Alarmierungssystem nach Anspruch 5, **dadurch gekennzeichnet, dass** die Steuereinrichtung (ST) auswertet, ob die Mobilstationen (MS) oder die Teilnehmerendeinrichtungen (TE) den Empfang der SMS-Meldung oder des Sprachrufes (Alert-Modus) ablehnen und dieses Ablehnen als Bestätigungsmeldung zählt.

7. Alarmierungssystem nach Anspruch 1 und 2, **dadurch gekennzeichnet, dass** die Steuereinrichtung (ST) zählt, ob mindestens zwei leere Speicherbereiche im Rufnummernspeicher (RSP) aufeinanderfolgen und in diesem Fall die Weiterleitung von Alarmmeldungen abbricht.

8. Alarmierungssystem nach Anspruch 4, **dadurch gekennzeichnet, dass** die Alarmempfangseinrichtung (AE) im Falle einer fehlenden Bestätigungsmeldung für eine SMS-Meldung die zugehörige Sprachmeldung ausliest und diese zu derselben Mobilstation (MS) oder Teilnehmerendeinrichtung (TE) übermittelt.

9. Alarmierungssystem nach Anspruch 5, **dadurch gekennzeichnet, dass** die Funkrufempfänger (FRE) zusätzlich einen Sender für das Senden des Quittungssignals aufweisen oder die Alarmempfangseinrichtung (AE) den Alarmzyklus fortsetzt und die Anzahl der Rückrufe des jeweiligen Funkrufempfängers (FRE) als Quittungssignal innerhalb einer einstellbaren Zeitdauer zählt.

10. Alarmierungssystem nach Anspruch 1, **dadurch gekennzeichnet, dass** die Alarmempfangseinrichtung (AE) Bestandteil eines mit einer Nebenstellenanlage oder Teilnehmerendeinrichtung in Verbindung stehenden Verbindungsgeräts ist, welches wie ein Endgerät an die Nebenstellenanlage und/oder die Amtsleitung angeschlossen wird und einem Anrufer aus dem Funknetz die direkte Durchwahl zu jeder Nebenstelle der Nebenstellenanlage ermöglicht, dass das Verbindungsgerät in die Betriebsarten "Nur-Alarmempfang" oder "Mischbetrieb Alarmempfänger" umsteuerbar ist und dass als Rufnummernspeicher für die automatische Weiterleitung der Alarmmeldung, die SIM-Karte der Mobileinrichtung (ME) und/oder ein Rufnummern- und Befehlsspeicher des Verbindungsgeräts mitbenutzt wird.

11. Alarmierungssystem nach Anspruch 10, **dadurch gekennzeichnet, dass** Module des Verbindungsgeräts wie Kurzwahlspeicher, Benutzerführung über Sprachansage, Schutz der Programmierung über eine Geheimzahl, Wahlwiederholung, Neuwahl, Blockierung der Abfrageversuche bei Falscheingabe, feste Durchschaltung, Rufumleitung, Freigabe von Rufnummerngruppen, Begrenzung der Zeichenzahl für Wahl, Abfrage der aktuellen Funk-Feldstärke, des Chipkarten-Status oder des Netzstatus, Selbstlernmodus mit Messung von Impuls-/Pausenzeiten, Überwachung des Gesprächskanals, Amtsholung für die Alarmempfangseinrichtung (AE) mitbenutzt werden, dass die Alarmempfangseinrichtung (AE) sowohl die Zahl der erfolgreichen als auch die Zahl der erfolglosen Alarmweitergaben zählt und speichert, dass bei Anwahl einer Rufnummer, die als besetzt gemeldet wurde erst eine weitere Rufnummer und nach einer Pause (beispielsweise von zwei Minuten) die vormals besetzte Rufnummer angerufen werden und dass die Aktualisierung der jeweiligen personenbezogenen Daten sowie die Konfiguration mittels Rechner vor Ort oder durch Fernsteuerung erfolgt.
